(19) Europäisches Patentamt
European Patent Office
Office européen des brevets

(11) EP 4 806 928 A1

(12) EUROPEAN PATENT APPLICATION

(43) Date of publication:
**16.09.2026 Bulletin 2026/38**

(21) Application number: **25163395.4**

(22) Date of filing: **13.03.2025**

(51) International Patent Classification (IPC):
***C08F 10/06*** *(2006.01)* ***C08F 4/659*** *(2006.01)*
***C08F 210/06*** *(2006.01)*

(52) Cooperative Patent Classification (CPC):
(C-Sets available)
**C08L 23/12;** C08F 4/65908; C08F 4/65912;
C08L 2205/03; C08L 2207/02 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06850 Kulloo (FI)**
- **KLIMKE, Katja Ellen**
  **4021 Linz (AT)**
- **PROESSLMAYR, Astrid**
  **4021 Linz (AT)**

(74) Representative: **Maikowski & Ninnemann Patentanwälte Partnerschaft mbB**
**Postfach 15 09 20**
**10671 Berlin (DE)**

# (54) POLYOLEFIN COMPOSITION COMPRISING HETEROPHASIC POLYPROPYLENE POLYMERS

(57) The invention relates to a polyolefin composition comprising a heterophasic polypropylene copolymer (HECO), wherein the heterophasic polypropylene copolymer comprises a matrix (M) being a propylene homopolymer (PPH) and an elastomeric propylene copolymer (EPC) dispersed in said matrix (M), having the following properties: a total ethylene (C2) content, as determined according to CRYSTEX QC analysis , in the range from 0.5 to less than 7.0 wt.-% (based on the total weight of the heterophasic propylene copolymer) combined with a melting Temperature $T_m$ (as determined by DSC analysis according to ISO 11357) in a range from 145°C to 162°C, and stress-whitening (SW) intensity lower than 3.5 (as determined according to the method described in the experimental section).

EP 4 806 928 A1

(52) Cooperative Patent Classification (CPC): (Cont.)

C-Sets
**C08F 10/06, C08F 4/65927;**
**C08F 110/06, C08F 2/001;**
**C08F 210/06, C08F 2/001;**
**C08L 23/12, C08L 23/12, C08L 23/16;**
C08F 110/06, C08F 2500/12;
C08F 210/06, C08F 2500/12, C08F 2500/17,
C08F 2500/27, C08F 2500/30, C08F 2500/31,
C08F 2500/34, C08F 2500/37, C08F 2500/39

## Description

The invention relates to a polyolefin composition comprising at least one heterophasic polypropylene copolymer and to an article, in particular an extruded tube or cable jacketing, made from said the polyolefin composition.

## Description

Polymers, like polypropylene, are increasingly used in different demanding applications including the Energy area like insulation cables and buffer tubes. Due to the higher life standards and more strict requirements, specific properties like high flow (energy saving and long flow length for thinner wall) and a good combination of softness, toughness and transparency, become continuously more important. The demands can be challenging, since many polymer properties are directly or indirectly interrelated, i.e. improving a specific property can only be accomplished on the expense of another property.

It is further important, that the polymers provide good optical properties in the sense of low haze and good transparency despite having undergone mechanical deformation, i.e. there is a strong requirement for polypropylene having a low tendency to stress whitening.

Stress-whitening in form of a white line appears along a bend or curve when a material is stressed by bending or punching operations. The appearance of white line indicates that there is an onset of failure of the corresponding material. The white colour is caused by the light scattering by the crazes and changes in the refractive index of the area under stress. Such stress whitening marks are highly disturbing the optical performance and impression of injection moulded final articles and should therefore be avoided.

Heterophasic propylene copolymers (HECOs) are a generally suitable class of soft base polymers applicable for pipes and tubes, as described for example in EP 3 115 411 B1 or in WO 2020/207825 A1.

Such heterophasic propylene copolymers comprise a matrix being either a propylene homopolymer or a random propylene copolymer in which an amorphous phase, which contains a propylene copolymer rubber (elastomer), is dispersed. Thus, the polypropylene matrix contains (finely) dispersed inclusions not being part of the matrix and said inclusions contain the elastomer. The term inclusion indicates that the matrix and the inclusion form different phases within the heterophasic propylene copolymer, said inclusions are for instance visible by high resolution microscopy, like electron microscopy or scanning force microscopy or atomic force microscopy, or by dynamic mechanical thermal analysis (DMTA). Further the heterophasic polypropylene may contain to some extent a crystalline polyethylene, which is a by-reaction product obtained by the preparation of the heterophasic propylene copolymer. Such crystalline polyethylene is present as inclusions of the amorphous phase due to thermodynamic reasons.

The rubber phase in such heterophasic systems normally scatters the light, which makes the resulting films produced from these systems white. This is due to the fact that the rubber phase has different refractive index than the surrounding matrix and/or forms relatively big spheres.

However, such heterophasic systems with stiff matrix and elastomeric resin dispersed therein are very sensitive to stress whitening or blushing. This is especially true for heterophasic systems having high rubber content. Stress whitening results from internal cavitation on the particle/matrix interface or inside the rubber particles of the polymer. As said cavitation is related to energy dissipation in the failure process stress whitening can hardly be avoided when designing materials combining a high level of toughness with high stiffness. While in case of failure, cracks are stopped and energy is dissipated at internal surfaces, this dissipation goes along with craze formation becoming visible in the deformation zone.

One way to improve the optical properties is to reduce the molecular weight of rubber phase, but this may introduce further problems, namely a reduction of the toughening effect and possible problems during production and conversion due to stickiness of the polymer powder.

It has long been known that introducing a modifier, e.g. addition of a high-density polyethylene (HDPE) component (H.J. Jang et al., Macromol. Symp. 2012, 312, 34-42). can drastically improve the situation, by both improving the mechanical properties and reducing the stress whitening.

Another approach is the use of heterophasic propylene copolymer comprising a random propylene copolymer matrix (so called RAHECO). By using copolymers having a comonomer matrix the melting temperature Tm and therefore the thermal resistance is reduced.

Thus, there is still a need for heterophasic polypropylene compositions, which show improved mechanical and optical properties, especially improved stress whitening performance. An ideal combination of the properties would be high flexibility and heat deformation resistance as well as both high toughness and good stress whitening resistance.

Hence, it is an object of the present invention to provide such a heterophasic polypropylene composition that is in particular applicable for tubes and pipes

This object has been solved by providing a polyolefin composition applicable for the manufacturing of tubes comprising a heterophasic polypropylene copolymer (HECO), wherein the heterophasic polypropylene copolymer comprises a matrix (M) being a propylene homopolymer (PPH) and an elastomeric propylene copolymer (EPC) dispersed

in said matrix (M), and wherein heterophasic polypropylene copolymer has the following properties:

a total ethylene (C2) content, as determined according to CRYSTEX QC analysis , in the range from 0.5 to less than 8.0 wt.-% (based on the total weight of the heterophasic propylene copolymer),

an intrinsic viscosity (IV), as determined according to CRYSTEX QC analysis , in the range from 0.5 to 3.0 dl/g,

a soluble fraction (SF) content, as determined according to CRYSTEX QC analysis, in the range from 5.0 to 20.0 wt.-% (based on the total weight of the heterophasic propylene copolymer);

the soluble fraction (SF) having one or more, preferably all of the following properties:

an ethylene content (C2(SF)), as determined according to CRYSTEX QC analysis, in the range from 10.0 to less than 30 wt.-% (based on the total weight of the soluble fraction),

an intrinsic viscosity (IV(SF)), as determined according to CRYSTEX QC analysis, in the range from 0.5 to 2.5 dl/g,

a crystalline fraction (CF), as determined according to CRYSTEX QC analysis, in the range from 95.0 to 80.0 wt.-% (based on the total weight of the heterophasic propylene copolymer);
the crystalline fraction (CF) having one or more, preferably all of the following properties:

an ethylene content (C2(CF)), as determined according to CRYSTEX QC analysis, in the range from 0.0 to 3.0 wt.-% (based on the total weight of the crystalline fraction),

an intrinsic viscosity (IV(CF)), as determined according to CRYSTEX QC analysis , in the range from 1.0 to 5.0 dl/g,

a melting Temperature $T_m$ (as determined by DSC analysis according to ISO 11357) in a range from 145°C to 162°C, and

Stress-whitening (SW) intensity lower than 3.5 (as determined according to the method described in the experimental section).
It is to be understood that small amounts of additives (for example in the range from 0 to 8 wt.-%, preferably in the range 0.01 to 5.0 wt.-%, more preferably in the range of 0.05 to 4.0 wt.-%, even more preferably in the range from 0.1 to 3.5 wt.-%, such as antioxidants or fillers, may be present in the described compositions
It is to be understood that the heterophasic propylene copolymer composition preferably further comprises an alpha-nucleating agent (NU), preferably a polymeric alpha-nucleating agent. Small amounts of additives, such as antioxidants, a reinforcing filler, such as talc and others may be present in the described compositions
As will be discussed in further detail below, the heterophasic polypropylene copolymer (HECO) used in the present polyolefin composition is obtained in a polymerization process using a single-site catalyst (SSC-PP).
It has surprisingly been found out that such a heterophasic propylene copolymer containing composition has not only improved mechanical properties but also improved optical properties, especially an improved stress whitening performance, which makes it suitable for the area like wire and cable (W&C), such as buffer tubes, cable jacketing etc.

Terms

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.
Whenever the terms "including" or "having" are used, these terms are meant to be equivalent to "comprising" as defined above.
Where an indefinite or definite article is used when referring to a singular noun, e.g. "a", "an" or "the", this includes a plural of that noun unless something else is specifically stated.
In the following the invention is defined in more detail.
Definitions of individual components of the heterophasic polypropylene copolymer (HECO)

As mentioned above, the heterophasic polypropylene copolymer (HECO) used in the polyolefin composition of the present invention comprises a matrix (M) being a propylene homopolymer (PPH) and an elastomeric propylene copolymer (EPC) dispersed in said matrix (M).

The term "matrix" is to be interpreted in its commonly accepted meaning, i.e. it refers to a continuous phase (in the present invention a continuous polymer phase) in which isolated or discrete particles such as rubber particles may be dispersed. The propylene homopolymer, preferably crystalline propylene homopolymer is present in such an amount that it forms a continuous phase which can act as a matrix. In the present invention polypropylene content and ethylene content of the matrix phase is measured by the crystalline fraction (CF) determined by TREF fractionation on CRYSTEX QC, Polymer Char (Valencia, Spain) as described in the method section below.

A propylene homopolymer (PPH), which may be a crystalline, more preferably crystalline isotactic propylene homopolymer forms the matrix of the heterophasic propylene copolymer (HECO).

The expression "homopolymer" used in the present invention relates to a polypropylene that consists substantially, i.e. of at least 97.0 wt.-%, preferably of at least 98.0 wt.-%, more preferably of at least 99.0 wt.-%, still more preferably of at least 99.8 wt.-% of propylene units. In a preferred embodiment only propylene units in the propylene homopolymer are detectable.

The propylene homopolymer matrix preferably has a melt flow rate MFR2 (ISO 1133; 230°C; 2.16 kg) in the range of 0.1 - 50 g/10 min, more preferably in the range of 1.0 - 40 g/10 min, even more preferably in the range of 2.0 - 30 g/10 min, still more preferably in the range of 2.0 - 10 g/10 min. The propylene homopolymer matrix can be unimodal or multimodal, e.g. bimodal.

The propylene homopolymer matrix preferably has a melting Temperature $T_m$ (as determined by DSC analysis according to ISO 11357) in a range from 145°C to 162°C, preferably from 148°C and 160°C, more preferably from 150°C to 158°C, even more preferably from 152°C to 157°C.

The propylene homopolymer matrix preferably has a sum of 2,1 regio defects from 0.01 to 1.50 mol-%, preferably from 0.1 to 1.2 mol-%, more preferably from 0.2 to 1.0 mol-%, even more preferably from 0.3 to 0.9 mol-%, still more preferably from 0.50 to 0.85 mol-%.

When the propylene homopolymer matrix phase is unimodal with respect to the molecular weight distribution, it may be prepared in a single stage process e.g. a slurry or gas phase process in a slurry or gas phase reactor. Preferably, a unimodal matrix phase is polymerized as a slurry polymerization. Alternatively, the unimodal matrix may be produced in a multistage process using at each stage process conditions which result in similar polymer properties.

Where the propylene homopolymer matrix comprises two or more different propylene polymers, like propylene homopolymer fractions (PPH-1) and (PPH-2) these may be polymers with different monomer make up and/or with different molecular weight distributions. These components may have identical or differing monomer compositions and tacticities.

Thus, in one embodiment or the present invention the matrix (M) is unimodal, whereas in another embodiment the matrix (M) is bimodal and consists of two propylene homopolymer fractions (PPH-1) and (PPH-2).

Furthermore, the terms "elastomeric propylene copolymer (EPC)", "dispersed phase" and "ethylene-propylene rubber' denote the same, i.e. are interchangeable. In the present invention polymer content and ethylene content of the disperse phase is measured by the soluble fraction (SF) determined by TREF fractionation on CRYSTEX QC, Polymer Char (Valencia, Spain) as described in the method section below.

An elastomeric propylene copolymer (EPC), which is a copolymer of propylene and an alphaolefin comonomer is dispersed in said matrix (M) (i.e. dispersed phase).

The elastomeric propylene copolymer (EPC) comprises units derived from propylene and ethylene and/or C4 to C20 alpha-olefins, more preferably from ethylene and/or C4 to C10 alpha-olefins and most preferably from ethylene.

Preferably, the elastomeric propylene copolymer (EPC) of the heterophasic propylene copolymer (HECO) is a predominantly amorphous propylene copolymer. The elastomeric propylene copolymer (EPC) is characterized by its soluble fraction content (SF). The soluble fraction (SF) is preferably composed of propylene and ethylene monomer units. The elastomeric propylene copolymer (EPC) can either be synthesized in the later step(s) of a multistage process, after the propylene homopolymer (PPH) has been synthesized. Alternatively, the elastomeric propylene copolymer (EPC) can be polymerised separately and mixed with the propylene homopolymer (PPH) in a separate melt blending step. It is preferred, that the incorporation of the EPC into the PPH is done during a multistage polymerisation process.

## Heterophasic polypropylene polymer (HECO)

The polyolefin composition of the present invention may contain the heterophasic propylene copolymer (HECO) as a major but also as the only resin component.

The heterophasic polypropylene copolymer (HECO) may have one or more, preferably all of the following properties:

a total ethylene (C2) content, as determined according to CRYSTEX QC analysisin the range from 1.0 to less than 7.0

wt.-%, more preferably from 2.0 to 6.0 wt.-%, even more preferably from 2.5 to 5.5 wt.-%, preferably from 3.0 to 5.0 wt.-%, more preferably from 3.5 to 4.5 wt.-% (based on the total weight of the heterophasic propylene copolymer), an intrinsic viscosity (IV), as determined according to CRYSTEX QC analysis , in the range from 1.0 to 3.0 dl/g, more preferably in the range from 1.5 to 3.0 dl/g, even more preferably in the range from 2.0 to 3.0 dl/g, still more preferably in the range from 2.5 to 3.0 dl/g.

The heterophasic polypropylene copolymer (HECO) may have further one or more, preferably all of the following properties:

a soluble fraction (SF) content, as determined according to CRYSTEX QC analysis, in the range from 10.0 to 18.0 wt.-%, more preferably in the range from 12.0 to 17.0 wt.-%, even more preferably in the range from 14.0 to 17.0 wt.-% (based on the total weight of the heterophasic propylene copolymer);

the soluble fraction (SF) having one or more, preferably all of the following properties:

an ethylene content (C2(SF)), as determined according to CRYSTEX QC analysis , in the range from 12.0 to 25.0 wt.-%, more preferably from 15.0 to less than 18.0 wt.-% (based on the total weight of the soluble fraction); an intrinsic viscosity (IV(SF)), as determined according to CRYSTEX QC analysis , in the range from 1.0 to 2.0 dl/g, more preferably in the range from 1.2 to 1.8 dl/g, more preferably in the range from 1.3 to 1.7 dl/g.

The heterophasic polypropylene copolymer (HECO) may have further one or more, preferably all of the following properties:

a crystalline fraction (CF), as determined according to CRYSTEX QC analysis, in the range from 90.0 to 82.0 wt.-%, preferably in the range from 88.0 to 83.0 wt.-%, more preferably in the range from 86.0 to 83.0 wt.-% (based on the total weight of the heterophasic propylene copolymer);

the crystalline fraction (CF) having one or more, preferably all of the following properties:

an ethylene content (C2(CF)), as determined according to CRYSTEX QC analysis , in the range from 0.8 to 2.5 wt.-%, more preferably from 1.0 to 2.3 wt.-%, even more preferably from 1.3 to 2.0 wt.-% (based on the total weight of the soluble fraction); an intrinsic viscosity (IV(CF)), as determined according to CRYSTEX QC analysis , in the range from 1.5 to 4.5 dl/g, more preferably in the range from 2.0 to 4.0 dl/g, even more preferably in the range from 2.5 to 3.5 dl/g.

The heterophasic polypropylene copolymer (HECO) may have a melting Temperature $T_m$ (as determined by DSC analysis according to ISO 11357) in a range from 148°C to 160°C, more preferably from 150°C to 158°C, even more preferably from 152°C to 156°C.

The heterophasic polypropylene copolymer (HECO) may have a stress-whitening (SW) intensity, (as determined according to the method described in the experimental section) of lower than 3.0, more preferably lower than 2.5, even more preferably lower than 2.0, still more preferably lower than 1.5, still more preferably lower than 1.0, even still more preferably lower than 0.5, such as in a range from 0.0 to lower than 3.0, preferably from 0.0 to lower than 2.5, more preferably from 0.0 to lower than 2.0, even more preferably from 0.0 to lower than 1.5, still more preferably from 0.0 to lower than 1.0, even still more preferably from 0.0 to lower than 0.5.

Further, the heterophasic polypropylene copolymer (HECO) may have a melt flow rate $MFR_2$ (measured according to ISO 1133, 2.16 kg, 230°C) in the range from 0.1 to 7.0 g/10 min, preferably from 0.3 to 5.0 g/10 min, more preferably from 0.4 to 3.0 g/10 min, even more preferably from 0.5 to 3.0 g/10 min, still more preferably from 0.6 to 1.5 g/10 min.

Still further, the heterophasic polypropylene copolymer (HECO) may have an impact strength (ISO179-1, Charpy notched 1eA +23°C, measured as described in the method section) of at least 15 kJ/$m^2$, preferably at least 20 kJ/$m^2$, more preferably of at least 25 kJ/$m^2$, in particular in a range from 15.0 to 50.0 kJ/$m^2$, more particular in a range from 20.0 to 40.0 kJ/$m^2$, even more particular in a range from 15.0 to 35.0 kJ/$m^2$.

Furthermore, the heterophasic polypropylene copolymer (HECO) may have a flexural modulus (ISO 178, measured as described in the method section) in a range from 300 to 1500 MPa, preferably from 400 to 1200 MPa, more preferably from 500 to 1000 MPa, even more preferably from 600 to 900 MPa, still more preferably from 700 to 800 MPa.

In a preferred embodiment, the heterophasic polypropylene copolymer (HECO) may have one or more, preferably all of the following properties:

a total ethylene (C2) content, as determined according to CRYSTEX QC analysis , in the range from 3.0 to 5.0 wt.-%, (based on the total weight of the heterophasic propylene copolymer),
an intrinsic viscosity (IV), as determined according to CRYSTEX QC analysis , in the range from 2.0 to 3.0 dl/g,

a soluble fraction (SF) content, as determined according to CRYSTEX QC analysis, in the range from 12.0 to 17.0 wt.-%, (based on the total weight of the heterophasic propylene copolymer);

the soluble fraction (SF) having one or more, preferably all of the following properties:

an ethylene content (C2(SF)), as determined according to CRYSTEX QC analysis , in the range from 12.0 to less than 18.0 wt.-%, (based on the total weight of the soluble fraction);

an intrinsic viscosity (IV(SF)), as determined according to CRYSTEX QC analysis , in the range from 1.2 to 1.8 dl/g,

a crystalline fraction (CF), as determined according to CRYSTEX QC analysis, in the range from 88.0 to 83.0 wt.-%, (based on the total weight of the heterophasic propylene copolymer);

a crystalline fraction (CF) having one or more, preferably all of the following properties:

an ethylene content (C2(CF)), as determined according to CRYSTEX QC analysis , in the range from 1.0 to 2.3 wt.-%, (based on the total weight of the soluble fraction);

an intrinsic viscosity (IV(CF)), as determined according to CRYSTEX QC analysis, in the range from 2.0 to 4.0 dl/g,

a melting Temperature $T_m$ (as determined by DSC analysis according to ISO 11357) in a range from 150°C to 158°C,

a stress-whitening (SW) intensity, (as determined according to the method described in the experimental section) of lower than 1.0,

a melt flow rate $MFR_2$ (measured according to ISO 1133, 2.16 kg, 230°C) in the range from 0.5 to 3.0 g/10 min,

an impact strength (ISO179-1, Charpy notched 1eA +23°C, measured as described in the method section) in a range from 20.0 to 40.0 kJ/m$^2$,

a flexural modulus (ISO 178, measured as described in the method section) between 600 and 900 MPa.

In an even more preferred embodiment, the heterophasic polypropylene copolymer (HECO) may have one or more, preferably all of the following properties:

a total ethylene (C2) content, as determined according to CRYSTEX QC analysis , in the range from 3.5 to 4.5 wt.-% (based on the total weight of the heterophasic propylene copolymer),
an intrinsic viscosity (IV), as determined according to CRYSTEX QC analysis , in the range from 2.5 to 3.0 dl/g,

a soluble fraction (SF) content, as determined according to CRYSTEX QC analysis, in the range from 14.0 to 17.0 wt.-% (based on the total weight of the heterophasic propylene copolymer);

the soluble fraction (SF) having one or more, preferably all of the following properties:

an ethylene content (C2(SF)), as determined according to CRYSTEX QC analysis , in the range from 15.0 to less than 18.0 wt.-% (based on the total weight of the soluble fraction);

an intrinsic viscosity (IV(SF)), as determined according to CRYSTEX QC analysis , in the range from 1.3 to 1.7 dl/g,

a crystalline fraction (CF), as determined according to CRYSTEX QC analysis, in the range from 86.0 to 83.0 wt.-% (based on the total weight of the heterophasic propylene copolymer);

a crystalline fraction (CF) having one or more, preferably all of the following properties:

an ethylene content (C2(CF)), as determined according to CRYSTEX QC analysis , in the range from 1.3 to 2.0 wt.-% (based on the total weight of the soluble fraction);

an intrinsic viscosity (IV(CF)), as determined according to CRYSTEX QC analysis , in the range from 2.5 to 3.5 dl/g,

a melting Temperature $T_m$ (as determined by DSC analysis according to ISO 11357) in a range from 152°C to 156°C,

a stress-whitening (SW) intensity, (as determined according to the method described in the experimental section) of lower than 0.5,

a melt flow rate $MFR_2$ (measured according to ISO 1133, 2.16 kg, 230°C) in the range from 0.5 to 3.0 g/10 min, still more preferably from 0.6 to 1.5 g/10 min,

an impact strength (ISO179-1, Charpy notched 1eA +23°C, measured as described in the method section) in a range from 15.0 to 35.0 kJ/m$^2$,

a flexural modulus (ISO 178, measured as described in the method section) between 700 and 800 MPa.

Nucleating agents

The heterophasic polypropylene composition of the present invention may further comprise an alpha-nucleating agent (NA) for promoting the $\alpha$-phase of polypropylene. Preferably the alpha-nucleating agent is a polymeric alpha-nucleating agent, more preferably a vinylcycloalkane polymer and/or a vinylalkane polymer.
Said polymeric alpha-nucleating agent may be introduced into the composition by blending with a masterbatch (MB) together with e.g. a carrier polymer or during polymerization of the heterophasic propylene copolymer (HECO), preferably, the polymeric alpha-nucleating agent is introduced into the composition by pre-polymerizing the catalyst used to prepare a part or all of the heterophasic propylene copolymer (HECO).
Such a polymeric nucleating agent may be as described above a vinyl polymer, such as a vinyl polymer derived from monomers of the formula

$$CH_2 = CH\text{-}CHR^1R^2$$

wherein $R^1$ and $R^2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably $R^1$ and $R^2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer. The weight ratio of vinyl compound to polymerization catalyst in the modification step of the polymerization catalyst preferably is 0.3 or more up to 40, such as 0.4 to 20 or more preferably 0.5 to 15, like 0.5 to 2.0.
The polymerization of the vinyl compound, e. g. VCH, can be done in any inert fluid that does not dissolve the polymer formed (e. g. polyVCH). It is important to make sure that the viscosity of the final catalyst/polymerized vinyl compound/inert fluid mixture is sufficiently high to prevent the catalyst particles from settling during storage and transport.
More preferably in this preferred embodiment, the amount of polymeric alpha-nucleating agent, like vinylcyclohexane (VCH), polymer and/or vinylalkane polymer, more preferably of vinylcyclohexane (VCH) polymer, in the heterophasic propylene copolymer (HECO) is not more than 500 ppm, more preferably of 1 to 200 ppm, most preferably 5 to 100 ppm.
The use of the polymeric alpha-nucleating agent in accordance with the present invention enables the

preparation of heterophasic propylene copolymer (HECO) having highly satisfactory mechanical properties, i.e. for improved stiffness / impact balance, so that it is not required for the compositions in accordance with the present invention to contain low molecular weight nucleating agents, in particular costly particulate nucleating agents like organo-phosphates or soluble nucleants like sorbitol- or nonitol-derived nucleating agents.

Additives

As mentioned, the polyolefin composition may comprise at least one additive, for example not more than 5 wt.-% of at least one additive, preferably not more than 4.0 wt.-%, more preferably not more than 3.0 wt.-%, even more preferably of not more than 2.0 wt.-%, still more preferably of not more than 1.0 wt.-% of at least one additive.

The at least one additive may be one of the following: a filler, a metal deactivator, UV stabilizer.

In one embodiment, the composition comprises a reinforcing filler, in particular talc, in an amount from 0.1 to 5.0 wt.-%, preferably from 0.3 to 3.0 wt.-%, more preferably 0.5 to 1.5 wt.-%, even more preferably 0.7 to 1.0 wt.-%, (based on the total weight of the polyolefin composition).

In another embodiment, the amount of said antioxidant in the polyolefin composition may be less than 0.5 wt.-% antioxidants, more in particular less than 0.3 wt.-% antioxidants, even more in particular less than 0.2 wt.-% antioxidants.

Examples of antioxidants which are commonly used in the art, are sterically hindered phenols (such as CAS No. 6683-19-8, also sold as Irganox 1010 FF™ by BASF, or one component of Irganox B 215 FF by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Particularly preferred metal deactivators are N,N'-bis(3(3',5'-di-tert-butyl-4'-hydroxyphenyl)propionyl) hydrazine commercially available from BASF as Irganox MD 1024 and 2,2'-oxamidobis(ethyl-3-(3,5-di-tert-butyl-4-hydroxyphenyl)propionate) commercially available from Palmarole as Palmarole MDA.P.11.

The metal deactivator may be used in an amount of 0.1 to 1.0 wt.-%, preferably 0.2 to 0.8 wt.-%, more preferably 0.3 to 0.5 wt.-% based on the total weight of the polyolefin composition.

Polymerization Process

The polyolefin composition comprising the heterophasic propylene copolymer (HECO) of the invention may be prepared by any suitable process, including in particular blending processes such as mechanical blending including mixing and melt blending processes and any combinations thereof as well as in-situ blending during the polymerization process. These can be carried out by methods known to the skilled person, including batch processes and continuous processes.

The heterophasic propylene copolymer (HECO) is an in-reactor blend obtained by a sequential polymerization process in at least two reactors connected in series, said sequential polymerization process preferably comprises the steps of

(i) polymerizing in a first reactor being a slurry reactor, preferably a loop reactor, propylene and 1-hexene, obtaining a first random propylene copolymer b1),
(ii) transferring said first random propylene copolymer b1) and unreacted comonomers of the first reactor in a second reactor being a gas phase reactor,
(iii) feeding to said second reactor propylene and 1-hexene,
(iv) polymerizing in said second reactor and in the presence of said first random propylene copolymer b1) propylene and 1-hexene obtaining a second random propylene copolymer b2), said first random propylene copolymer b1) and said second random propylene copolymer b2) form component B),

wherein further in the first reactor and second reactor the polymerization takes place in the presence of a solid catalyst system, said solid catalyst system (SCS) comprises a single-site catalyst.

A suited solid catalyst system (SCS) comprises a transition metal compound of formula (I)

$$R_n(Cp)_2MX_2 \qquad (I)$$

wherein

each Cp independently is an unsubstituted or substituted and/or fused cyclopentadienyl ligand, substituted or unsubstituted indenyl or substituted or unsubstituted fluorenyl ligand; the optional one or more substituent(s) being

independently selected preferably from halogen, hydrocarbyl (e.g. C1-C20-alkyl, C2-C20-alkenyl, C2- C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, -SiR"$_3$, -OSiR"$_3$, -SR", -PR"$_2$, OR" or -NR"$_2$,

each R" is independently a hydrogen or hydrocarbyl selected from Cl-C20-alkyl, C2-C20-alkenyl, C2-C20-alkynyl, C3-C12-cycloalkyl or C6-C20-aryl; or in case of -NR"$_2$, the two substituents R" can form a five- or six-membered ring, together with the nitrogen atom to which they are attached;

R is a bridge of 1-2 C-atoms and 0-2 heteroatoms, wherein the heteroatom(s) can be Si, Ge and/or O atom(s), wherein each of the bridge atoms may bear independently substituents selected from C1-C20-alkyl, tri(C1-C20-alkyl)silyl, tri(C1-C20-alkyl)siloxy or C6-C20-aryl substituents); or a bridge of one or two heteroatoms selected from silicon, germanium and/or oxygen atom(s),

M is a transition metal of Group 4 selected from Zr or Hf, especially Zr;

each X is independently a sigma-ligand selected from H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"$_3$, -SiR"$_3$, -OSiR"$_3$, -NR"$_2$ or -CH$_2$-Y, wherein Y is C6-C20-aryl, C6-C20-heteroaryl, C1-C20-alkoxy, C6-C20-aryloxy, NR"$_2$,-SR", - PR"$_3$, -SiR"$_3$, or -OSiR"$_3$;

each of the above mentioned ring moieties alone or as a part of another moiety as the substituent for Cp, X, R" or R can further be substituted with C1-C20-alkyl which may contain Si and/or O atoms; and

n is 1 or 2.

It is especially preferred that the transition metal compound of formula (I) is an organozirconium compound of formula (II) or (II')

(II) (II')

wherein

M is Zr;

each X is a sigma ligand, preferably each X is independently a hydrogen atom, a halogen atom, a C1-C6 alkoxy group, C1-C6 alkyl, a phenyl or a benzyl group;

L is a divalent bridge selected from $-R'_2C-$, $-R'_2C-CR'_2$, $-R'_2Si-$, $-R'_2Si-SiR'_2-$, $-R'_2Ge-$, wherein each R' is independently a hydrogen atom, C1-C20 alkyl, C3-C10 cycloalkyl, tri(C1-C20-alkyl)silyl, C6-C20-aryl or C7-C20 arylalkyl;

each $R^2$ or $R^{2'}$ is a C1-C10 alkyl group;

$R^{5'}$ is a C1-C10 alkyl group or a $Z'R^{3'}$ group;

$R^6$ is hydrogen or a C1-C10 alkyl group;

$R^{6'}$ is a C1-C10 alkyl group or a C6-C10 aryl group;

$R^7$ is hydrogen, a C1-C6 alkyl group or a $ZR^3$ group;

$R^{7'}$ is hydrogen or a C1-C10 alkyl group;

Z and Z' are independently O or S;

$R^{3'}$ is a C1-C10 alkyl group or a C6-C10 aryl group optionally substituted by one or more halogen groups;

$R^3$ is a C1-C10 alkyl group;

each n is independently 0 to 4;

and each $R^1$ is independently a C1-C20 hydrocarbyl group.

Use of the heterophasic propylene copolymer containing polyolefin composition

The polyolefin composition comprising the heterophasic propylene copolymer (HECO) as described may be used for manufacturing tubes and cable jacketing. Such tubes and cable jacketing are preferably obtained by casting or extrusion, specifically by extrusion. A typical extrusion process will employ a single-screw extruder with a circular die to either produce a tube or to coat a cable, followed by solidification of said tube or cable jacket in water and/or air.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

The following definitions of terms and determination methods apply for the above general description of the invention as well as to the below examples unless otherwise defined.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg

**Crystex QC analysis**

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied:

$$\text{Conc} = a + b^*\text{Abs(CH)} + c^*(\text{Abs(CH)})^2 + d^*\text{Abs}(CH_3) + e^*(\text{Abs}(CH_3)^2 + f^*\text{Abs(CH)}^*\text{Abs}(CH_3) \quad \text{(Equation 1)}$$

$$CH_3/1000TC = a + b^*\text{Abs(CH)} + c^*\ \text{Abs}(CH_3) + d * (\text{Abs}(CH_3)/\text{Abs(CH)}) + e * (\text{Abs}(CH_3)/\text{Abs(CH)})^2 \quad \text{(Equation 2)}$$

The constants a to f for equation 1 and a to e for equation 2 were determined by using least square regression analysis. The $CH_3$/1000TC (total C Atoms) is converted to the ethylene content in wt.-% using following relationship:

$$\text{Wt.-\% (Ethylene in EP Copolymers)} = 100 - CH_3/1000TC * 0.3 \quad \text{(Equation 3)}$$

Amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.%. A linear calibration curve is used:

$$\text{Wt.-\% XS} = a * \text{Wt.-\% SF} \quad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP copolymers and PP polymers with IV = 2-4 dL/g. The determined calibration curve is linear.

$$\text{IV (dl/g)} = a * \text{Vsp/c} \quad \text{(Equation 5)}$$

The constant a for equation 4 and 5 was determined by using least square regression analysis respectively. The samples to be analyzed are weighed out in concentrations of 10 mg/ml to 20mg/ml.

After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the N2 atmosphere during dissolution.

For PP composition containing inorganic fillers or pigments or any other non-TCB soluble polymeric substances removal of these is required. This can be done by hot filtration prior to injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the IV[dl/g] and the C2[wt%] of the PP composition. During the second injection the soluble fraction SF (at low temperature) and the crystalline fraction CF (at high temperature) with the crystallization cycle are measured (SF[wt%], C2(SF)[wt%], IV(SF)[dl/g], C2(CF)[wt%], IV(CF)[dl/g]).

**Quantification of microstructure by NMR spectroscopy**

Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1 H and 13C respectively. All spectra were recorded using a 13C optimized 10 mm extended temperature probe head at 125°C using nitrogen gas for all pneumatics. Approximately 200 mg of material was dissolved in approximately 3 ml of 1,1,2,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.
To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.
Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.
Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.
The mole percent comonomer incorporation was calculated from the mole fraction:

$$E\ [mol\%] = 100 * fE$$

The weight percent comonomer incorporation was calculated from the mole fraction:

$$E\ [wt\%] = 100 * ( fE * 28.06 ) / ( (fE * 28.06) + ((1-fE) * 42.08) ).$$

**DSC analysis, melting temperature ($T_m$):** measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization temperature ($T_c$) was determined from the cooling step, while melting temperature ($T_m$) and melting enthalpy ($H_m$) were determined from the second heating step.
**The glass transition temperature Tg and the storage modulus G'(23 °C)** are determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.

**Flexural Modulus**

The flexural modulus is determined according to ISO 178. The test specimens have a dimension of 80 x 10 x 4.0 $mm^3$ (length x width x thickness) and are prepared by injection molding according to EN ISO 1873-2. The length of the span between the supports: 64 mm and the test speed 2 mm/min.

**Charpy Notched impact strength**

Charpy Notched impact strength was determined according to ISO 179 1eA at 23°C using 80x10x4 $mm^3$ test bars injection moulded in line with EN ISO 1873-2.

**Stress whitening**

Stress whitening is determined by a modified three point bending test, namely the reversed three point bending test (applied as described in WO 2020/207825 A1).

The reversed three point bending test is carried out on a universal testing machine (Zwick Z010) at 50 mm/min. The samples are 2 mm thick injection moulded UL94 specimens (125x12.5x2mm). The experimental set-up consists of the reversed three point bending test coupled with an optical detection system.

The mechanical set up consists of: a fix part, with a span of 40 mm, a moving part including a loading edge with a light source and an optical sensor fixed on the moving part closely above and beneath the specimen by a vertical rod. This ensures that the distance between light source and optical sensor remains constant during the test, which is a prerequisite for a good reproducibility of the measurements.

The force-deflection and the optical signal-deflection curves are recorded. At the beginning of the test, the optical signal is calibrated to 100 %, regardless of the initial transparency/haziness of the inserted sample.

Occurrence of stress whitening is correlated with a sharp drop in the optical signal-deflection curve further below). Three different parameters are determined: a) stress whitening angle, b) residual size (width) of the blushing zones c) stress whitening intensity.

a) The stress whitening angle [°], (also: bending angle or onset-angle) indicates, at which bending angle stress whitening (SW) occurs. The occurrence of stress whitening is correlated with a sharp drop of the optical response (light transmission) during bending.

The onset angle for stress whitening is determined according to formula (VI):

Onset angle = (3*10°%* s*)-( 2.1*10%* s*) — (3.48*10°?* s?)+(6.4591*s)-0.9997 (VI)

wherein "s" denominates the deflection of the loading edge, at which the light transmission curve drops and is determined: At the beginning of the test, the optical signal is calibrated to 100 %, regardless of the initial transparency/haziness of the inserted sample. The deflection of the loading edge (s), at which the in the light transmission curve drops is determined by the abscissa-value of the intersection between the tangent of the slope of the optical signal and the 100 % line of the initial optical signal.

b) Residual size (width) of the blushing zones immediately after a bending of 90°, measured in [mm], also denominated as "Res-SW 90°" or "residual stress whitening";

The width of a blushing zone (b) is determined as follows: Tests are conducted to a deflection corresponding to an angle of 90° according to the formula (VI) above. Then the specimen is abruptly unloaded with a crosshead speed of 400 mm/min. The width of the blushing area is measured immediately after testing using a slide gage.

c) Stress whitening intensity: this is the residual intensity of the blushing zone immediately after a bending of 90 deg. C (visual appreciation from 0 to 5, with 0: no remaining blush, 5: intensive whitening), also denominated as "SW-intensity".

Evaluation of the stress whitening intensity:

A mark of 0 is attributed when there is no residual blushing; a note of 5 when the whitening of the deformed zone is extremely pronounced. The obtained value is entered manually in a result sheet; average calculations are automated. The determination of these parameters is somewhat subjective and dependent on an operator. Although the obtained values are somewhat subjective they give essential information on the elastic recovery potential of the material.

The following degrees of intensity are noted: a. an intensity of 0 is remarkably low (i.e. no blushing visible) b. an intensity of up to 1 is excellent, c. an intensity between 1.1 and 1.5 is good; d. an intensity between 1.6 and 3 is acceptable; e. an intensity higher than 3 is insufficient.

**Material / process description**

Manufacturing of HECO-IE1

The copolymer of propylene and ethylene was prepared in a sequential process comprising a prepolymerisation reactor, a loop reactor, first gas phase reactor (GPR1), and a second gas phase reactor (GPR2). The catalyst used for manufacturing the copolymer of propylene and ethylene was prepared as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoro-propoxy)-1-propanol. The metallocene complex (MC1 in WO 2015/011135 A1) is prepared as described in WO 2013/007650 A1 (metallocene E2 in WO 2013/007650 A1). The specific reaction conditions are summarized in Table 1.

Table 1: Polymerization conditions for HECO

| Lot number | HECO-1 |
|---|---|
| **Prepoly reactor** | |
| Temp. (°C) | 20 |
| Press. (kPa) | 5098 |
| Catalyst feed (kg/h) | 2,1 |
| H2 (g/h) | 0,5 |
| **Loop reactor** | |
| Temp. (°C) | 70 |
| Press. (kPa) | 5229 |
| Feed H2/C3 ratio (mol/kmol) | 0,1 |
| Polymer Split (wt.-%) | 40 |
| MFR2 (g/10 min) | 0,8 |
| Total C2 (wt.-%) | 0 |
| **GPR1** | |
| Temp. (°C) | 75 |
| Press. (kPa) | 2400 |
| H2/C3 ratio (mol/kmol) | 1,9 |
| Polymer Split (wt.-%) | 45 |
| MFR2 (g/10 min) | 0,8 |
| **GPR2** | |
| Temp. (°C) | 75 |
| Press. (kPa) | 2447 |
| H2/C3 ratio (mol/kmol) | 0,3 |
| C2/C3 ratio (mol/kmol) | 638 |
| Polymer Split (wt.-%) | 15 |
| | |

C2 ethylene
IV intrinsic viscosity
XCS xylene cold soluble fraction
$H_2$/C3 ratio hydrogen / propylene ratio
C2/C3 ratio ethylene / propylene ratio
Loop Loop reactor
1/2 GPR 1/2 gas phase reactor

The powder produced above were mixed with 500ppm of Irganox1010 FF (BASF), 500 ppm of Irgafos 168 (BASF), 500 ppm of Ceasit AV/T (Calcium Stearate, Bärlocher) and compounded on a ZSK 57 twin screw extruder, with

throughput of 100kg/h and melt temperature of 210°C. The properties are shown in Table 2.

In Table 2 several examples (comparative-CE; inventive-IE) are summarized.

- Inventive Example (IE1): HECO-IE1
- Comparative Example (CE1): HECO-CE1
- Comparative Example (CE2): HECO-CE2

HECO-CE1 is a soft random heterophasic polypropylene copolymer intended for use in blown film applications. It is commercially available from Borealis AG.

HECO-C2 is a heterophasic block copolymer suitable for chillroll and tubular quench processes. It is commercially available from Borealis AG.

As can be seen in Table 2, HECO-IE1 combines a low stress whitening with good mechanical properties, like a high Tm and flexural modulus allowing a wide range of application.

In contrast, HECO-CE1 being a soft RAHECO, has a low $T_m$ making it difficult for high T applications.

While HECO-CE2 has high $T_m$, the stress whitening effect is pronounced limiting the application range.

Table 2:

| | unit | IE1 | CE1 | CE2 |
|---|---|---|---|---|
| | | | | |
| MFR | g/10min | 0,9 | 1 | 0,95 |
| Tm | °C | 154 | 141 | 164 |
| SF | wt.% | 16,23 | 21,08 | 16,4 |
| C2 | wt.% | 4,23 | 9,53 | 8,63 |
| C2(SF) | wt.% | 17,04 | 30,18 | 39,77 |
| C2(CF) | wt.% | 1,92 | 4,91 | 3,43 |
| IV | dl/g | 2,85 | 3,07 | 3,33 |
| IV(SF) | dl/g | 1,47 | 2,89 | 3,13 |
| IV(CF) | dl/g | 3,08 | 3,08 | 3,28 |
| Flexural modus | MPa | 735 | 602 | 1000 |
| Charpy NIS/23°C | kJ/m2 | 30 | 54 | 36 |
| G’ | MPa | 466 | 320 | 539 |
| Tg1 | °C | -0,9 | -3,6 | 1,9 |
| Tg2 | °C | -32,9 | -52 | -50,8 |
| SW intensity | | 0 | 0 | 4 |

The above result show that a heterophasic propylene copolymer composition as defined in the present invention shows improved optical properties, expressed by stress whitening intensity, but also good mechanical properties, expressed by flexural modulus (FM) and notched Charpy impact strength (NIS). The compositions of the present invention provide a synergistic effect primarily due to the better balance of stiffness (flexural modulus), impact (NIS) and stress whitening resistance.

## Claims

**1.** A polyolefin composition comprising
a heterophasic polypropylene copolymer HECO, wherein the heterophasic polypropylene copolymer comprises a matrix M being a propylene homopolymer PPH and an elastomeric propylene copolymer EPC dispersed in said matrix M, the heterophasic polypropylene copolymer having the following properties:

- a total ethylene C2 content, as determined according to CRYSTEX QC analysis , in the range from 0.5 to less

than 8.0 wt.-% (based on the total weight of the heterophasic propylene copolymer),
- an intrinsic viscosity IV, as determined according to CRYSTEX QC analysis , in the range from 0.5 to 3.0 dl/g,
- a soluble fraction SF content, as determined according to CRYSTEX QC analysis, in the range from 5.0 to 20.0 wt.-% (based on the total weight of the heterophasic propylene copolymer);
the soluble fraction SF having one or more, preferably all of the following properties:

an ethylene content C2(SF), as determined according to CRYSTEX QC analysis, in the range from 10.0 to less than 30.0 wt.-% (based on the total weight of the soluble fraction),
an intrinsic viscosity IV(SF), as determined according to CRYSTEX QC analysis, in the range from 0.5 to 2.5 dl/g,

- a crystalline fraction CF, as determined according to CRYSTEX QC analysis, in the range from 95.0 to 80.0 wt.-% (based on the total weight of the heterophasic propylene copolymer);
the crystalline fraction CF having one or more, preferably all of the following properties:

an ethylene content C2(CF), as determined according to CRYSTEX QC analysis, in the range from 0.5 to 3.0 wt.-% (based on the total weight of the crystalline fraction),
an intrinsic viscosity IV(CF), as determined according to CRYSTEX QC analysis, in the range from 1.0 to 5.0 dl/g,

- a melting Temperature $T_m$ (as determined by DSC analysis according to ISO 11357) in a range from 145°C to 162°C, and
- stress-whitening SW intensity lower than 3.5 (as determined according to the method described in the experimental section).

**2.** Polyolefin composition according to claim 1, wherein the heterophasic polypropylene copolymer HECO has the following properties:

a total ethylene C2 content, as determined according to CRYSTEX QC analysis, in the range from 1.0 to less than 7.0 wt.-%, more preferably from 2.0 to 6.0 wt.-%, even more preferably from 2.5 to 5.5 wt.-%, preferably from 3.0 to 5.0 wt.-%, more preferably from 3.5 to 4.5 wt.-% (based on the total weight of the heterophasic propylene copolymer),
an intrinsic viscosity IV, as determined according to CRYSTEX QC analysis , in the range from 1.0 to 3.0 dl/g, more preferably in the range from 1.5 to 3.0 dl/g, even more preferably in the range from 2.0 to 3.0 dl/g, still more preferably in the range from 2.5 to 3.0 dl/g.

**3.** Polyolefin composition according to one of the preceding claims, wherein the heterophasic polypropylene copolymer HECO has

a soluble fraction SF content, as determined according to CRYSTEX QC analysis, in the range from 10.0 to 18.0 wt.-%, more preferably in the range from 12.0 to 17.0 wt.-%, even more preferably in the range from 14.0 to 17.0 wt.-% (based on the total weight of the heterophasic propylene copolymer);
the soluble fraction SF having one or more, preferably all of the following properties:

an ethylene content C2(SF), as determined according to CRYSTEX QC analysis, in the range from 12.0 to 25.0 wt.-%, more preferably from 15.0 to less than 18.0 wt.-% (based on the total weight of the soluble fraction);
an intrinsic viscosity IV(SF), as determined according to CRYSTEX QC analysis, in the range from 1.0 to 2.0 dl/g, more preferably in the range from 1.2 to 1.8 dl/g, more preferably in the range from 1.3 to 1.7 dl/g.

**4.** Polyolefin composition according to one of the preceding claims, wherein the heterophasic polypropylene copolymer HECO has

a crystalline fraction CF, as determined according to CRYSTEX QC analysis, in the range from 90.0 to 82.0 wt.-%, preferably in the range from 88.0 to 83.0 wt.-%, more preferably in the range from 86.0 to 83.0 wt.-% (based on the total weight of the heterophasic propylene copolymer);
a crystalline fraction CF having one or more, preferably all of the following properties:

an ethylene content C2(CF), as determined according to CRYSTEX QC analysis, in the range from 0.8 to 2.5 wt.-%, more preferably from 1.0 to 2.3 wt.-%, even more preferably from 1.3 to 2.0 wt.-% (based on the total weight of the soluble fraction);
an intrinsic viscosity IV(CF), as determined according to CRYSTEX QC analysis, in the range from 1.5 to 4.5 dl/g, more preferably in the range from 2.0 to 4.0 dl/g, even more preferably in the range from 2.5 to 3.5 dl/g.

**5.** Polyolefin composition according to one of the preceding claims, wherein the heterophasic polypropylene copolymer HECO has a melting temperature $T_m$ (as determined by DSC analysis according to ISO 11357) in a range from 148°C to 160°C, more preferably from 150°C to 158°C, even more preferably from 152°C to 156°C.

**6.** Polyolefin composition according to one of the preceding claims, wherein the heterophasic polypropylene copolymer HECO has a stress-whitening SW intensity, (as determined according to the method described in the experimental section) of lower than 3.0, more preferably lower than 2.5, even more preferably lower than 2.0, still more preferably lower than 1.5, still more preferably lower than 1.0, most preferably lower than 0.5.

**7.** Polyolefin composition according to one of the preceding claims, wherein the heterophasic polypropylene copolymer HECO has a melt flow rate $MFR_2$ (measured according to ISO 1133, 2.16 kg, 230°C) in the range from 0.1 to 7.0 g/10 min, preferably from 0.3 to 5.0 g/10min, more preferably from 0.4 to 3.0 g/10min, even more preferably from 0.5 to 3.0 g/10 min, still more preferably from 0.6 to 1.5 g/10 min.

**8.** Polyolefin composition according to one of the preceding claims, wherein the heterophasic polypropylene copolymer HECO has an impact strength (ISO179-1, Charpy notched 1eA +23°C, measured as described in the method section) of at least 15 kJ/$m^2$, preferably at least 20 kJ/$m^2$, more preferably of at least 25 kJ/$m^2$, in particular in a range from 15.0 to 50.0 kJ/$m^2$, more particular in a range from 20.0 to 40.0 kJ/$m^2$, even more particular in a range from 15.0 to 35.0 kJ/$m^2$.

**9.** Polyolefin composition according to one of the preceding claims, wherein the heterophasic polypropylene copolymer HECO has a flexural modulus (determined according to ISO 178 as described in the method section) in a range from 300 to 1500 MPa, preferably from400 to 1200 MPa, more preferably from 500 to 1000 MPa, even more preferably from 600 to 900 MPa, still more preferably from 700 to 800 MPa.

**10.** Polyolefin composition according to one of the preceding claims, wherein the heterophasic polypropylene copolymer HECO comprises at least one nucleating agent, in particular a vinylcycloalkane polymer or vinylalkane polymer, such as vinylcyclohexane polymer PVCH.

**11.** Polyolefin composition according to one of the preceding claims, wherein the polyolefin composition comprises a reinforcing filler, in particular talc, in an amount from 0.1 to 5.0 wt.-%, preferably from 0.3 to 3.0 wt.-%, more preferably 0.5 to 1.5 wt.-%, even more preferably 0.7 to 1.0 wt.-%, (based on the total weight of the polyolefin composition).

**12.** Polyolefin composition according to one of the preceding claims, wherein the polyolefin composition comprises a metal deactivator and/or UV stabilizer.

**13.** Use of a polyolefin composition according to one of the preceding claims for manufacturing tubes, cables and jacketing for cables.

**14.** An article, in particular an extruded tube or cable jacketing made of a polyolefin composition according to one of the claims 1-12.

Europäisches
Patentamt
European
Patent Office
Office européen
des brevets

# EUROPEAN SEARCH REPORT

Application Number
EP 25 16 3395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/270949 A1 (WANG JINGBO [AT] ET AL) 15 August 2024 (2024-08-15)<br>* example IE1 *<br>* claims 1-16 * | 1-9,14 | INV.<br>C08F10/06<br>C08F4/659<br>C08F210/06 |
| X | WO 2019/121597 A1 (BOREALIS AG [AT]) 27 June 2019 (2019-06-27)<br>* example HECO *<br>* example CE1 *<br>* tables 1, 3 *<br>* claims 1-13 * | 1-10,14 | |
| X | WO 2023/110737 A1 (BOREALIS AG [AT]) 22 June 2023 (2023-06-22)<br>* examples HECO 1, 3 and 4 *<br>* tables 1, 3 *<br>* claims 1-12 * | 1-10,14 | |
| X,D | WO 2020/207825 A1 (BOREALIS AG [AT]) 15 October 2020 (2020-10-15)<br>* example IE1 *<br>* claims 1-14 * | 1-14 | TECHNICAL FIELDS SEARCHED (IPC)<br>C08F |

The present search report has been drawn up for all claims

2

| Place of search | Date of completion of the search | Examiner |
|---|---|---|
| Munich | 28 August 2025 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 3395

This annex lists the patent family members relating to the patent documents cited in the above-mentioned European search report. The members are as contained in the European Patent Office EDP file on
The European Patent Office is in no way liable for these particulars which are merely given for the purpose of information.

28-08-2025

| Patent document cited in search report | Publication date | Patent family member(s) | Publication date |
|---|---|---|---|
| US 2024270949 A1 | 15-08-2024 | BR 112023025812 A2 | 27-02-2024 |
| | | CN 117597389 A | 23-02-2024 |
| | | EP 4355824 A1 | 24-04-2024 |
| | | ES 3033103 T3 | 30-07-2025 |
| | | US 2024270949 A1 | 15-08-2024 |
| | | WO 2022263345 A1 | 22-12-2022 |
| WO 2019121597 A1 | 27-06-2019 | CN 111433277 A | 17-07-2020 |
| | | EP 3502177 A1 | 26-06-2019 |
| | | KR 20200083628 A | 08-07-2020 |
| | | PT 3502177 T | 17-03-2020 |
| | | RU 2745620 C1 | 29-03-2021 |
| | | US 2021171750 A1 | 10-06-2021 |
| | | WO 2019121597 A1 | 27-06-2019 |
| WO 2023110737 A1 | 22-06-2023 | CN 118382669 A | 23-07-2024 |
| | | EP 4194503 A1 | 14-06-2023 |
| | | ES 2977502 T3 | 26-08-2024 |
| | | US 2025043122 A1 | 06-02-2025 |
| | | WO 2023110737 A1 | 22-06-2023 |
| WO 2020207825 A1 | 15-10-2020 | EP 3953401 A1 | 16-02-2022 |
| | | US 2022195166 A1 | 23-06-2022 |
| | | WO 2020207825 A1 | 15-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3115411 B1
- WO 2020207825 A1
- WO 2015011135 A1
- WO 2013007650 A1


### Non-patent literature cited in the description


- **H.J. JANG et al.** *Macromol. Symp.*, 2012, vol. 312, 34-42
- *CHEMICAL ABSTRACTS*, 6683-19-8
- *CHEMICAL ABSTRACTS*, 31570-04-4
- *CHEMICAL ABSTRACTS*, 693- 36-7
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson.*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N.** *Macromolecules*, 1984, vol. 17, 1950
- **W-J. WANG** ; **S. ZHU**. *Macromolecules*, 2000, vol. 33, 1157